# EUROPÄISCHE PATENTANMELDUNG

(11) **EP 2 535 225 A1**
(43) Veröffentlichungstag der Anmeldung: **19.12.2012**
(21) Anmeldenummer: 12171990.0
(22) Anmeldetag: 14.06.2012
(51) Int. Cl.: B60R 15/00, B61D 35/00, B64D 11/02, B60N 3/18, B60P 3/36, B67D 1/00

(54) **Flüssigkeitsbehälter, rückstromgesicherte Befülleinrichtung und Verfahren zum Befüllen eines Flüssigkeitsbehälters**

(30) Priorität: 14.06.2011 DE 202011102814 U
(71) Anmelder: Evac GmbH, 22880 Wedel (DE)
(72) Erfinder: Hansel, Kai, 22880 Wedel (DE)
(74) Vertreter: Eisenführ, Speiser & Partner

(57) **Zusammenfassung**

Die Erfindung betrifft einen Flüssigkeitsbehälter, eine Rückstromgesicherte Befülleinrichtung für flache Flüssigkeitsbehälter sowie ein Verfahren zum Befüllen eines flachen Flüssigkeitsbehälters. Der Flüssigkeitsbehälter umfasst eine Behälterwandung, die einen Behälterinnenraum umschließt, dessen horizontale Querschnittsfläche größer ist als seine vertikale Querschnittsfläche und eine in der Behälterwandung angeordnete Einfüllvorrichtung zum Befüllen des Behälters mit einer Flüssigkeit. Die Einfüllvorrichtung umfasst eine Behälterbefüllungsöffnung, welche den Behälterinnenraum mit einer Vorkammer verbindet, die Vorkammer umfasst eine Einfüllanschlussöffnung, welche zur Zufuhr einer Flüssigkeit ausgebildet und so ausgerichtet ist, dass ein Flüssigkeitsstrom, der durch die Einfüllanschlussöffnung in die Vorkammer eintritt, auf die Behälterbefüllungsöffnung trifft, die Vorkammer umfasst eine Abflussöffnung, welche zur Abfuhr einer Flüssigkeit aus der Vorkammer ausgebildet und so angeordnet ist, dass sie in Einbaulage des Flüssigkeitsbehälters in Schwerkraftrichtung unterhalb der ersten Öffnung liegt.

## Beschreibung

Die Erfindung betrifft einen Flüssigkeitsbehälter, umfassend eine Behälterwandung, die einen Behälterinnenraum umschließt, insbesondere einen Behälterinnenraum dessen horizontale Querschnittsfläche größer ist als seine vertikale Querschnittsfläche und eine in der Behälterwandung angeordnete Einfüllvorrichtung zum Befüllen des Behälters mit einer Flüssigkeit. Ein weiterer Aspekt der Erfindung ist eine rückstromgesicherte Befülleinrichtung für flache Flüssigkeitsbehälter.

Flüssigkeitsbehälter der zuvor beschriebenen Bauweise werden dazu eingesetzt, um Flüssigkeiten, beispielsweise Trinkwasser, zu speichern. Ein typischer Anwendungsfall hierfür ist beispielsweise die Bereitstellung von Trinkwasser in jeglicher Art von Fahrzeugen, beispielsweise Schienenfahrzeugen, Luftfahrzeugen oder Straßenfahrzeugen.

Auf Grund konstruktiver Vorgaben in solchen Anwenden werden Flüssigkeitsbehälter oftmals in einer an die Einbauverhältnisse angepassten Geometrie bereitgestellt. Häufig ist dies eine sehr zerklüftete Geometrie und regelmäßig ist es vorteilhaft, wenn ein Flüssigkeitsbehälter für solche Anwendungen in einer sehr flachen Bauweise bereitgestellt wird. Unter einer flachen Bauweise wird im Zusammenhang mit dieser Beschreibung und den Ansprüchen verstanden, dass der Behälter in Schwerkraftrichtung eine Höhe aufweist, die im Vergleich kleiner ist als eine Abmessung in einer oder in beiden horizontalen Richtungen, insbesondere um eine Größenordnung kleiner ist. Eine solche flache Bauform eignet sich beispielsweise gut dazu, um in einem gekofferten Dachbereich eines Fahrzeuges eingebaut zu werden und kann nicht genutzte Hohlräume eines Fahrzeuges in günstiger Weise zur Speicherung von einer Flüssigkeit nutzbar machen.

In vielen Anwendungen, beispielsweise im Bereich der Trinkwasserspeicherung, ist es durch Sicherheitsvorschriften von Betreibern eines Trinkwassernetzes oder Sicherheitsvorschriften von Benutzern solcher Flüssigkeitsbehälter, teilweise auch durch staatliche Vorschriften, vorgesehen, dass in einer zuverlässigen Weise verhindert wird, dass bei der Befüllung solcher Flüssigkeitsbehälter versehentlich Flüssigkeitsreste oder auch größere Flüssigkeitsmengen aus dem Flüssigkeitsbehälter in ein zur Befüllung angeschlossenes Leitungsnetz zurückfließen oder eindringen, aus dem der Flüssigkeitsbehälter befüllt wird. So ist beispielsweise oftmals für Trinkwasserbehälter vorgeschrieben, dass eine Rückflussverhinderungsvorrichtung vorhanden ist, die verhindert, dass aus dem Trinkwasserbehälter jegliche darin enthaltene Flüssigkeit zurück in das Trinkwasserleitungsnetz gelangt, wenn der Trinkwasserbehälter aus dem Trinkwasserleitungsnetz befüllt wird. Solche Sicherungseinrichtungen sind beispielsweise in der europäischen Norm EN 1717 beschrieben und werden durch zahlreiche Nutzer solcher Trinkwasserbehälter unter Bezugnahme auf diese Norm vorgeschrieben.

Die Bereitstellung einer zuverlässigen Vorrichtung zur Verhinderung des Rückflusses aus Flüssigkeitsbehältern stellt insbesondere dann ein Problem dar, wenn der Flüssigkeitsbehälter eine flache Bauform aufweist. Oftmals werden Rückflussverhinderungsvorrichtungen eingesetzt, die zwar den unerwünschten Rückfluss von Flüssigkeit verhindern können, hierbei aber in Kauf nehmen, dass die maximale Füllhöhe des Flüssigkeitsbehälters nicht erzielt wird. Unter maximaler Füllhöhe soll hierbei verstanden, dass der Flüssigkeitsbehälter, gegebenfalls unter Berücksichtigung von Sicherheitsreserven, die in Folge thermisch bedingter Ausdehnungen vorzusehen sind, bis an oder knapp unter die obere Behälterwand befüllt werden kann. Die maximale Füllhöhe bewirkt somit, dass das tatsächliche nutzbare Fassungsvermögen des Behälters seinem Volumen oder etwa seinem Volumen entspricht.

Während bei Flüssigkeitsbehältern, die nicht flach ausgeführt sind, sondern sich in vertikaler Richtung in Relation zu der horizontalen Erstreckung über eine vergleichbar große Höhe erstrecken, eine nicht vollständig erreichbare Füllhöhe im Regelfall nicht zu einer signifikanten Reduktion des Fassungsvermögens führt, eine solche Reduktion der Füllhöhe bei flachen Behältern oftmals mit einer signifikanten Verringerung des Fassungsvermögens verbunden, beispielsweise kann das tatsächliche Fassungsvermögen gegenüber dem tatsächlichen Volumen des Flüssigkeitsbehälters um 30 % - 40 % oder sogar mehr reduziert sein.

Der Erfindung liegt die Aufgabe zu Grund, einen flachen Flüssigkeitsbehälter bereitzustellen, der einen unerwünschten Rücklauf in einen Befüllungsleitung zuverlässig verhindert, hierbei aber ermöglich, dass das tatsächliche Fassungsvermögen des Flüssigkeitsbehälters dem tatsächlichen Volumen des Flüssigkeitsbehälter entspricht oder zumindest nicht nennenswert unterhalb des tatsächlichen Volumens liegt.

Dieses Aufgabe wird erfindungsgemäß bei einem Flüssigkeitsbehälter der eingangs beschriebenen Bauweise gelöst, indem die Einfüllvorrichtung eine Behälterbefüllungsöffnung umfasst, welche den Behälterinnenraum mit einer Vorkammer verbindet, die Vorkammer eine Einfüllanschlussöffnung umfasst, welche zur Zufuhr einer Flüssigkeit ausgebildet und so ausgerichtet ist, dass ein Flüssigkeitsstrom, der durch die Einfüllanschlussöffnung in die Vorkammer eintritt, auf die Behälterbefüllungsöffnung trifft, die Vorkammer eine Abflussöffnung umfasst, welche zur Abfuhr einer Flüssigkeit aus der Vorkammer ausgebildet und so angeordnet ist, dass sie in Einbaulage des Flüssigkeitsbehälters in Schwerkraftrichtung unterhalb der ersten Öffnung liegt.

Mit dem erfindungsgemäßen Flüssigkeitsbehälter wird eine zuverlässige wirkende Rückflussverhinderung bereitgestellt. Diese Rückflussverhinderung basiert auf einem gravimetrische Wirkungsprinzip. Sie beruht darauf, dass etwaig rückströmende Flüssigkeit, die im Zuge eine Befüllung bei angeschlossener Befüllungsleitung durch die erfindungsgemäße Behälterbefüllungsöffnung aus dem Flüssigkeitsbehälter rückwärts ausströmt, zunächst in eine Vorkammer eintritt. In dieser Vorkammer gelangt die rückströmende Flüssigkeit schwerkraftbedingt in einen unteren Bereich der Vorkammer und tritt dort durch die Abflussöffnung aus, die als Überlauf wirkt. Hierdurch wird verhindert, dass die solcher Art rückströmend Flüssigkeit in eine Leitung gelangt, die an die Behälter-Befüllungsöffnung angeschlossen ist.

Erfindungsgemäß wird folglich eine Befüllungsleitung nicht unmittelbar an eine mit dem Behälterinnenraum direkt kommunizierende Öffnung angeschlossen, sondern stattdessen an eine Einfüllanschlussöffnung, die direkt mit einer Vorkammer kommuniziert. Diese Vorkammer ist folglich fluidtechnisch zwischen Befüllungsleitung und den Behälterinnernaum geschaltet und kommuniziert wiederum direkt über eine Behälterbefüllungsöffnung mit dem Behälterinnenraum. Durch Anordnung der Einfüllanschlussöffnung und Behälterbefüllungsöffnung in solcher Weise, dass ein Flüssigkeitsstrom, der durch die Einfüllanschlussöffnung in die Vorkammer eintritt, direkt auf die Behälterbefüllungsöffnung trifft, wird sichergestellt, dass praktisch verlustfrei oder mit nur geringen Verlusten die zugeführte Flüssigkeit durch die Vorkammer in den Behälterinnenraum gelangt. Dies wird erreicht, ohne dass hierfür innerhalb der Vorkammer zwangsläufig Verbindungselemente in Form einer Leitung, Rohrführung oder dergleichen zwischen der Einfüllanschlussöffnung und der Behälte!-befüllungsöffnung ausgebildet sind. Stattdessen legt die Flüssigkeit in der Vorkammer eine freie Bewegung über eine bestimme Distanz zurück, wobei diese freie Bewegung durch die Einströmgeschwindigkeit und gegebenenfalls die Schwerkraft solcher Art geleitet wird, dass sie auf die Behälterbefüllungsöffnung trifft.

Dabei sind die Eiₙfüllanschlussöffnungen und die Behälterbefüllungsöffnung so angeordnet, dass ein umgekehrter Strömungsweg aus der Behälterbefüllungsöff nung in die Vorkammer jedoch im praktischen Einsatz nicht stattfinden kann. Flüssigkeit, die durch die Behälterbefüllungsöffnung in die Vorkammer eintritt, trifft nicht auf die Einfüllanschlussöffnung, sondern gelangt schwerkraftbedingt in der Vorkammer zu der Abflussöffnung und strömt durch diese aus.

Dabei ist zu berücksichtigen, dass in praktischen Einsatz, ebenso wie dies auch in den hier zu erfüllenden Normen berücksichtigt ist, die Befüllung eines rücklaufgesicherten Trinkwasserbehälters mit einem Überdruck gegenüber dem Behälterinnenraum erfolgt. Dieser Überdruck kann höher sein als der umgekehrt auftretende Überdruck bei Rückströmung von Flüssigkeit aus dem Flüssigkeitsbehälter in die bzw. in Richtung der Einfüllanschlussöffnung. Die Erfindung macht sich in diesem Zusammenhang und unter diesen Umständen zunutze, dass durch diese Druckverhältnisse bezüglich des Befüllungsvorgangs und des Rückströmvorgangs durch Zwischenschaltung einer Vorkammer eine Rückstromsicherung durch Schwerkrafteinfiuss auf die strömende Flüssigkeit erzielt werden kann.

Die Vorkammer kann erfindungsgemäß in den Flüssigkeitstank selbst integriert sein, so dass die Einfüllanschlussöffnung in diesem Fall in die Behälteraußenwand integriert ist und sämtliche die Vorkammer definierende Wände hiervon innenliegend angeordnet sind. Die Vorkammer kann alternativ aber auch teilweise oder vollständig über die eigentliche Kontur des Flüssigkeitsbehälters herausragen, beispielsweise als vorgesetzte Vorkammer seitlich herausstehen, gegebenenfalls aber auch über die obere Begrenzungswand des Flüssigkeitsbehälters hinausstehen. Die Vorkammer kann integral mit dem Flüssigkeitsbehälter ausgeführt sein oder als separates Bauteil ausgeführt sein, welches über eine entsprechende Verbindung fluiddicht mit dem Flüssigkeitsbehälter verbunden wird.

Gemäß einer ersten bevorzugten Ausführungsform ist vorgesehen, dass die Behälterbefüllungsöffnung durch eine untere Öffnungskante begrenzt wird, die in Einbaulage des Flüssigkeitsbehälters auf gleicher Höhe oder unterhalb einer die Einfüllanschlussöffnung - begrenzenden unteren Öffnungskante der Einfüllanschlussöffnung liegt, und/oder die Behälterbefüllungsöffnung durch eine obere Öffnungskante begrenzt wird, die in Einbaulage des Flüssigkeitsbehälters oberhalb oder auf gleicher Höhe oder unterhalb einer die Einfüllanschlussöffnung begrenzenden oberen Öffnungskante der Einfüllanschlussöffnung liegt. Als Unter- bzw. Oberkante ist dabei bei gekrümmt verlaufenden Unter- bzw. Oberkanten der jeweiligen Öffnungen der niedrigste bzw. höchste Punkt der jeweiligen Kante zu verstehen.

Noch weiter ist es bevorzugt, dass die Behälterbefüllungsöffnung durch eine untere Öffnungskante begrenzt wird, die in Einbaulage des Flüssigkeitsbehälters zumindest abschnittsweise, vorzugsweise vollständig als gerade Kante auf einer horizontalen Ebene verläuft.

Durch eine solche Ausgestaltung der unteren Öffnungskante der Behälterbefüllungsöffnung wird ein maximaler Befüllungspegel des Behälterinnenraums definiert, der genau bis an diese untere Kante der Behälterbefüllungsöffnung heranreicht. Zugleich wird sichergestellt, dass bei Überschreitung dieses maximalen Befüllungspegels ein Abfließen der überschüssigen Flüssigkeit über einen breiten Öffnurtgsquerschnitt erfolgen kann, was dazu führt, dass in zuverlässiger Weise und ohne einen großen Druckaufbau ein solches überschüssiges Volumen aus dem Behälterinnenraum über die Vorkammer zur Abflussöffnung geleitet werden kann und eine Rückströmung sicher verhindert wird.

Dabei ist es noch weiter bevorzugt, wenn die Behälterbefüllungsöffnung einen rechteckigen Querschnitt mit einer in Einbaulage des Flüssigkeitsbehälters horizontal verlaufenden unteren Kante hat. Durch einen solchen rechteckigen Querschnitt der Behälterbefüllungsöffnung wird ein definierter maximaler Pegel innerhalb des Behälters sichergestellt und gleichzeitig eine zuverlässige Ableitung etwaiger überschüssiger Flüssigkeitsanteile gewährleistet.

Noch weiter ist es bevorzugt, dass die Einfüllanschlussöffnung einen Öffnungsquerschnitt aufweist, der in Einbaulage des Flüssigkeitsbehälters in einer schräg zur Horizontalebene verlaufenden Ebene liegt. Mit dieser spezifischen Ausgestaltung wird eine besonders vorteilhafte Führung der Flüssigkeit durch die Vorkammer bewirkt. Durch den schräg zur horizontalen verlaufenden Querschnitt der

Einfüllanschlussöffnung tritt dem Flüssigkeitsstrom zur Befüllung des Flüssigkeitsbehälters in einer schrägen Weise in die Vorkammer ein, wobei der Flüssigkeitsstrom bevorzugt schräg abwärts gerichtet ist, in dem die Einfüllanschlussöffnung oberhalb der Behälterbefüllungsöffnung liegt. Dieser schräge Flüssigkeitsstrom trifft auf die Behälterbefüllungsöffnung und gelangt dadurch in den Behälterinnenraum. Durch die schräge Leitung des Flüssigkeitsstroms wird es daher insbesondere möglich, die Einfüllanschlussöffnung oberhalb der Behälterbefüllungsöffnung anzuordnen. Hierdurch kann die wirksame Rückströmungsverhinderung weiter verbessert werden.

Dabei ist zu verstehen, dass die Strömungsführung in die Vorkammer hinein zwar insbesondere durch eine bestimmte Anordnung des Querschnitts der jeweiligen Öffnung erfolgen kann, hierzu aber zusätzlich oder alternativ auch andere Mittel zur Strömungsführung eingesetzt werden können. Als solche anderen Mittel können zum Beispiel Leitwände, eine bestimmte Ausgestaltung und Ausrichtung der Kanten der jeweiligen Öffnungen und dergleichen eingesetzt werden. So ist beispielsweise neben der spezifischen Ausgestaltung der Einfüllanschlussöffnung mit einer definierten Strömungsrichtung auch zusätzlich oder alternativ vorstellbar, dass die Behälterbefüllungsöffnung in bestimmter Weise ausgebildet wird, um Flüssigkeit, die aus dem Behälter in die Vorkammer eintritt, in bestimmter Weise so zu leiten, dass sie nicht auf die Einfüllanschlussöffnung trifft und insbesondere auf die Abflussöffnung trifft. Dies kann durch entsprechende Ausrichtung des Querschnitts der Behälterbefüllungsöffnung oder entsprechende strömungsleitende Elemente im Bereich dieser Öffnung erfolgen.

Noch weiter ist es bevorzugt, dass die Einfüllanschlussöffnung fluchtend zu der ersten Öffnung liegt. Durch eine solche fluchtende Anordnung kann bei den in der Praxis auftretenden und in den einschlägigen, zu berücksichtigenden Normen vorgesehenen Druckverhältnissen in der Befüllungssituation und der zu verhindernden Rückstromsituation eine einerseits günstige und verlustfreie Befüllung des Behälterinnenraums realisiert werden, andererseits ein unerwünschter Rückstrom zuverlässig verhindert werden.

Schließlich kann der erfindungsgemäße Flüssigkeitsbehälter fortgebildet werden, indem die Behälterbefüllungsöffnung in Einbaulage des Flüssigkeitsbehälters fluchtend oder oberhalb der oberen Wand des Flüssigkeitsbehälters liegt, insbesondere indem die Vorkammer sich über die obere Wand des Flüssigkeitsbehälters erstreckt. Mit dieser Ausgestaltung wird es insbesondere ermöglicht, dass der Flüssigkeitsbehälter bis an seine obere Gewandung gefüllte wird, das heißt das Fassungsvermögen dem Volumen des Flüssigkeitsbehälters entspricht.

Ein weiterer Aspekt der Erfindung betrifft eine rückstromgesicherte Befülleinrichtung, die sich insbesondere für flache Flüssigkeitsbehälter eignet, umfassend einen durch eine Vorkammerwandung begrenzten Vorkammerinnenraum, eine in der Vorkammerwandung ausgebildete Behälterbefüllungsöffnung, eine in der Vorkammerwandung ausgebildete Einfüllanschlussöffnung, welche zur Zufuhr einer Flüssigkeit ausgebildet und so ausgerichtet ist, dass ein Flüssigkeitsstrom, der durch die Einfüllanschlussöffnung in den Vorkammerinnenraum eintritt, auf die Behälterbefüllungsöffnung trifft, eine in der Vorkammerwandung ausgebildete Abflussöffnung, welche zur Abfuhr einer Flüssigkeit aus dem Vorkammerinnenraum ausgebildet und so angeordnet ist, dass sie in Einbaulage der Befülleinrichtung unterhalb der Behälterbefüllungsöffnung liegt.

Eine solche Befülleinrichtung eignet sich dazu, um mit einem Flüssigkeitsbehälter in solcher Art zusammenzuwirken, dass es ermöglicht wird, den Flüssigkeitsbehälter nahezu vollständig zu befüllen und hierbei einen unerwünschten Rückstrom von Flüssigkeit in die Befüllungsleitung zuverlässig zu verhindern. Dabei können auch Flüssigkeitsbehälter in flacher Bauweise praktisch vollständig befüllt werden. Die Befülleinrichtung kann dabei als Bauelement zur Herstellung von rückstromgesicherten Flüssigkeitsbehältern verwendet werden. Ebenso eignet sich die Befülleinrichtung dazu, um bereits bestehende und gegebenenfalls auch eingebaute Flüssigkeitsbehälter nachzurüsten, um deren Fassungsvermögen unter Sicherung gegen Rückstrom zu erhöhen. Dabei ist zu verstehen, dass zu diesem Zweck gegebenenfalls vorhandene Anschlüsse, Überlauföffnungen und dergleichen an den Behältern verschlossen werden müssen und die erfindungsgemäße Befülleinrichtung über einen separaten, gesondert herzustellenden

Anschluss an den Flüssigkeitsbehälter angeschlossen werden muss. Aufgrund der spezifischen Ausgestaltung der erfindungsgemäßen Befülleinrichtung kann diese aber so kompakt und montagefreundlich ausgeführt sein, dass eine solche Nachrüstung bestehender Flüssigkeitsbehälter erfolgen kann, ohne dass diese dazu notwendigerweise aus ihrer Position in einem Fahrzeug ausgebaut werden müssen.

Die Befülleinrichtung kann fortgebildet werden, indem die Behälterbefüllungsöffnung durch eine untere Öffnungskante begrenzt wird, die in Einbaulage des Flüssigkeitsbehälters auf gleicher Höhe oder unterhalb einer die Einfüllanschlussöffnung begrenzenden unteren Öffnungskante der Einfüllanschlussöffnung liegt.

Weiterhin kann die Befülleinrichtung fortgebildet werden, indem die Behälterbefüllungsöffnung durch eine obere Öffnungskante begrenzt wird, die in Einbaulage des Flüssigkeitsbehälters auf gleicher Höhe oder unterhalb einer die Einfüllanschlussöffnung begrenzenden oberen Öffnungskante der Einfüllanschlussöffnung liegt.

Die Befülleinrichtung kann weiter fortgebildet werden, indem die Behälterbefüllungsöffnung durch eine untere Öffnungskante begrenzt wird, die in Einbaulage des Flüssigkeitsbehälters zumindest abschnittsweise, vorzugsweise vollständig als gerade Kante auf einer horizontalen Ebene verläuft:

Noch weiter kann die Befülleinrichtung fortgebildet werden, indem die Behälterbefüllungsöffnung einen rechteckigen Querschnitt mit einer in Einbaulage des Flüssigkeitsbehälters horizontal verlaufenden unteren Kante hat.

Weiter ist vorgesehen die Befülleinrichtung fortzubilden, indem die Einfüllanschlussöffnung einen Öffnungsquerschnitt aufweist, der in Einbaulage des Flüssigkeitsbehälters in einer schräg zur Horizontalebene verlaufenden Ebene liegt. Schließlich kann die Befülleinrichtung fortgebildet werden, indem die Einfüllanschlussöffnung fluchtend zu der Behälterbefüllungsöffnung liegt.

Bezüglich dieser Fortbildungen der Befülleinrichtung wird Bezug genommen auf die hier zu korrespondierenden Merkmalsbeschreibungen und Vorteile zu den zuvor erläuterten Fortbildungen des erfindungsgemäßen Flüssigkeitsbehälters.

Der erfindungsgemäße Flüssigkeitsbehälter bzw. die erfindungsgemäße Befülleinrichtung kann dabei bevorzugt nach einem Verfahren zum Befüllen eines flachen Flüssigkeitsbehälters betrieben werden, welches die Schritte aufweist:
- Zuführen von Flüssigkeit durch eine Einfüllanschlussöffnung in eine Vorkammer,
- Durchleiten der Flüssigkeit von der Einfüllanschlussöffnung durch die Vorkammer über eine Behälterbefüllungsöffnung in den Flüssigkeitsbehälter, wobei die Behälterbefüllungsöffnung vorzugsweise so zu der Einfüllanschlussöffnung angeordnet ist, dass ein Flüssigkeitsstrom, der durch die Einfüllanschlussöffnung strömt, auf die Behälterbefüllungsöffnung trifft und insbesondere die Behälterbefüllungsöffnung fluchtend zu der Einfüllanschlussöffnung angeordnet ist, wobei Flüssigkeit, welche aus dem Flüssigkeitsbehälter durch die Behälterbefüllungsöffnung tritt, in der Vorkammer schwerkraftbedingt durch eine Abflussöffnung austritt, die in Schwerkraftrichtung unterhalb der Behälterbefüllungsöffnung und der Einfüllanschlussöffnung liegt,

Mit diesen Verfahren ist eine besonders effiziente Befüllung eines Flüssigkeitsbehälters, insbesondere eines flachen Flüssigkeitsbehälters möglich und hierbei zugleich eine zuverlässige Verhinderung unerwünschter Rückströme von Flüssigkeit aus dem Behälter in die Befüllungsleitung sichergestellt.

Eine bevorzugte Ausführungsform wird anhand der beiliegenden Figuren beschrieben. Es zeigen:
Figur 1 eine vertikal geschnittene, perspektivische Ansicht eines Ausschnitts eines erfindungsgemäßen Flüssigkeitsbehälters, und

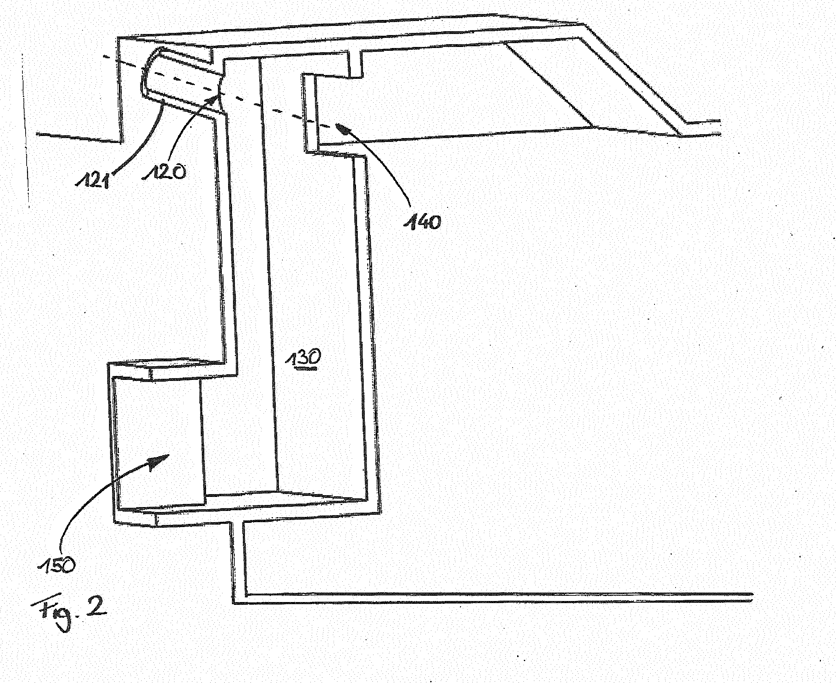

Figur 2 eine Ansicht gemäß Figur 1 einer zweiten Ausführungsform.

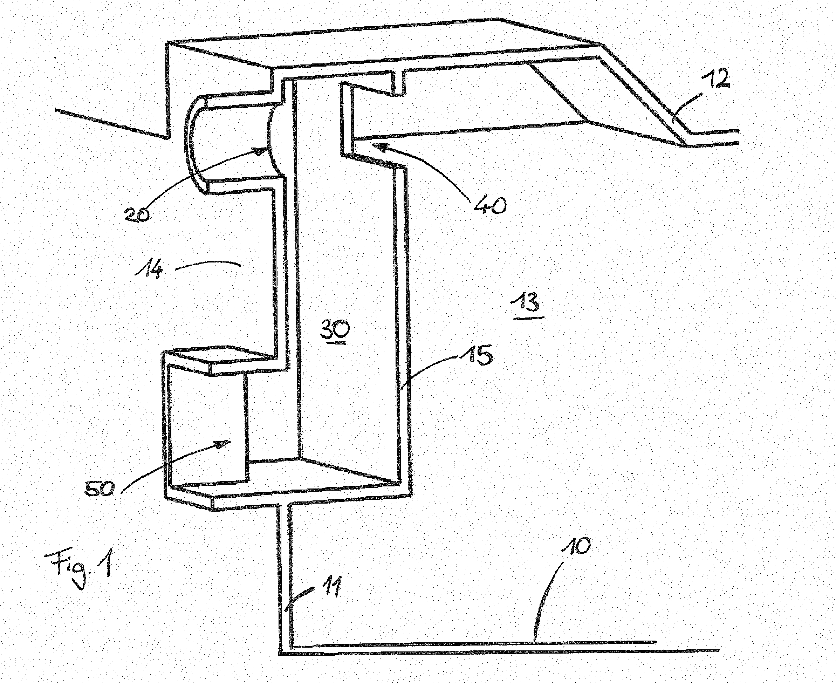

Diese zweite Ausführungsform ist hinsichtlich der Anordung der Behälterbefüllungsanordnung 140, der Vorkammer 130 und der Überlauf-/Entlüftungsöffnung 150 baugleich mit der in Figur 1 gezeigten ersten Ausführungsform.

Die zweite Ausführungsform unterscheidet sich von der ersten Ausführungsform allerdings darin, dass die Einfüllöffnung 120 oberhalb von der Behälterbefüllungsöffnung 140 liegt. Konkret ist die Öffnung, mit der die Einlassöffnung 120 in die Vorkammer 130 mündet, durch eine obere Kante begrenzt, die leicht oberhalb der oberen Kante der Behälterbefüllungsöffnung 140 liegt und eine untere Kante begrenzt, die oberhalb der unteren Kante der Behälterbefüllungsöffnung liegt.

Die Befüllöffnung 120 ist an einem an dem Vorkammergehäuse angeformten Stutzen 121 ausgebildet. Dieser Stutzen 121 ist als im Querschnitt kreisförmiger roher Abschnitt ausgebildet. Die Längsachse dieses Rohrabschnitts erstreckt sich in einer gegenüber der Horizontalen geneigten Richtung von außen oben nach innen unten. Die Neigung ist dabei solcherart auf die Höhendifferenz zwischen der Einlassöffnung 120 und der Behälterbefüllungsöffnung 140 und den Abstand zwischen diesen beiden Öffnungen abgestimmt, dass die Mittellängsachse des Stutzens 121 durch die Mitte der Behälterbefüllungsöffnung 140 verläuft. Ein Wasserstrahl, der durch eine außen an den Stutzen 121 angeschlossenen Wasserdruck durch die Einfüllöffnung 120 strömt, trifft hierdurch exakt auf die Behälterbefüllungsöffnung 140. Die Behälterbefüllungsöffnung 140 weist einen größeren Querschnitt auf als die Einlassöffnung 120 und der Stutzen 121. Hierdurch wird sichergestellt, dass der durch die Einfüllöffnung 120-strömende Wasserstrom praktisch verlustfrei durch die Behälterbefüllungsöffnung 140 in den Behälter gelangt.

Der Flüssigkeitsbehälter wird durch eine untere Behälterwand 10, eine seitliche Behälterwand 11 und eine obere Behälterwand 12 gebildet, die einen Behälterinnenraum 13 umschließen.

Die seitliche Behälterwand 11 erstreckt sich in einem begrenzten Bereich über die obere Behälterwand 12 hinaus und bildet somit einen hervorstehenden Behälterinnenabschnitt aus. In diesem nach oben hinausziehenden Bereich ist eine Anschlussöffnung 20 für eine Frischwasserleitung ausgebildet. Die Einfüllöffnung 20 ist als Stutzen ausgeführt, auf die ein Schlauch von außen aufgeschoben werden kann, um eine Verbindung mit einem Trinkwasserleitungsnetz herzustellen. Die Einfüllöffnung 20 liegt mit ihrem gesamten Querschnitt oberhalb von der oberen Behälterwandung 12 und mündet in das durch den hervorstehenden Volumenteil 14 gebildete Innenraumvolumen.

Das Innenraumvolumen 14 ist durch eine vertikale Wand 15 von dem übrigen Behälterinnenraum abgetrennt. Durch die vertikale Vorkammerwand 15 und hieran seitlich anschließende Vorkammerwände 16 sowie den gegenüber zur vertikalen Vorkammerwand 15 ausgebildeten Abschnitt der seitlichen Behälterwandung 11 wird eine Vorkammer 30 gebildet.

Die Einfüllöffnung 20 mündet in diese Vorkammer 30.

Gegenüberliegend zu der Einlassöffnung 20 ist eine Behälterbefüllungsöffnung 40 angeordnet. Diese Behälterbefüllungsöffnung ist als Querschnitt rechteckige Öffnung angeordnet und liegt fluchtend zu der Einfüllöffnung 20.

Ein Trinkwasserstrom, der durch die Einfüllöffnung 20 in die Vorkammer eintritt, trifft auf die Behälterbefüllungsöffnung 40 und gelangt so in den Innenraum 13 des Trinkwasserbehälters. Hierbei sind die Einfüllöffnungen 20 und die Behälterbefüllungsöffnung 40 so ausgerichtet und dimensioniert, dass keine Anteile des so zugeführten Trinkwassers in der Vorkammer verbleiben.

Die Vorkammer 30 erstreckt sich vertikal ausgehend von der Einlassöffnung 20 zu einer Überlauf-/ Entlüftungsöffnung 50. Die Überlauf-/ Entlüftungsöffnung 50 ist in Schwerkraftrichtung unterhalb der Einfüllöffnung 20 angeordnet und verbindet die Vorkammer 30 mit einem Ablaufschlauch.

Flüssigkeit, die in Folge einer Überbefüllung oder durch Überdruck im Frischwassertank durch die Behälterbefüllungsöffnung 40 in die Vorkammer 30 eintritt, strömt schwerkraftbedingt in der Vorkammer nach unten und gelangt zur Überlauf-/ Entlüftungsöffnung 50. Das so rückströmende Wasser gelangt daher über die Überlauf-/ Entlüftungsöffnung in den Ablaufschlauch und es wird folglich zuverlässig verhindert, dass dieses aus dem Trinkwassertank austretende Wasser in die Einlauföffnung 20 eintritt und folglich in das Trinkwassernetz gelangen könnte.

## Patentansprüche

1. Flüssigkeitsbehälter, umfassend
- Eine Behälterwandung, die einen Behälterinnenraum umschließt, dessen horizontale Querschnittsfläche größer ist als seine vertikale Querschnittsfläche,
- eine in der Behälterwandung angeordnete Einfüllvorrichtung zum Befüllen des Behälters mit einer Flüssigkeit,
**dadurch gekennzeichnet, dass**
- die Einfüllvorrichtung eine Behälterbefüllungsöffnung umfasst, welche den Behälterinnenraum mit einer Vorkammer verbindet,
- die Vorkammer eine Einfüllanschlussöffnung umfasst, welche zur Zufuhr einer Flüssigkeit ausgebildet und so ausgerichtet ist, dass ein Flüssigkeitsstrom, der durch die Einfüllanschlussöffnung in die Vorkammer eintritt, auf die Behälterbefüllungsöffnung trifft,
- die Vorkammer eine Abflussöffnung umfasst, welche zur Abfuhr einer Flüssigkeit aus der Vorkammer ausgebildet und so angeordnet ist, dass sie in Einbaulage des Flüssigkeitsbehälters in Schwerkraftrichtung unterhalb der ersten Öffnung liegt.

2. Flüssigkeitsbehälter nach Anspruch 1,
**dadurch gekennzeichnet, dass**
- die Behälterbefüllungsöffnung durch eine untere Öffnungskante begrenzt wird, die in Einbaulage des Flüssigkeitsbehälters auf gleicher Höhe oder unterhalb einer die Einfüllanschlussöffnung begrenzenden unteren Öffnungskante der Einfüllanschlussöffnung liegt, und/oder
- die Behälterbefüllungsöffnung durch eine obere Öffnungskante begrenzt wird, die in Einbaulage des Flüssigkeitsbehälters oberhalb oder auf gleicher Höhe oder unterhalb einer die Einfüllanschlussöffnung begrenzenden oberen Öffnungskante der Einfüllanschlussöffnung liegt.

3. Flüssigkeitsbehälter nach Anspruch 1 oder 2,
**dadurch gekennzeichnet, dass** die Behälterbefüllungsöffnung durch eine untere Öffnungskante begrenzt wird, die in Einbaulage des Flüssigkeitsbehälters zumindest abschnittsweise, vorzugsweise vollständig als gerade Kante auf einer horizontalen Ebene verläuft.

4. Flüssigkeitsbehälter nach einem der vorhergehenden Ansprüche,
**dadurch gekennzeichnet, dass** die Behälterbefüllungsöffnung einen rechteckigen Querschnitt mit einer in Einbaulage des Flüssigkeitsbehälters horizontal verlaufenden unteren Kante hat.

5. Flüssigkeitsbehälter nach einem der vorhergehenden Ansprüche,
**dadurch gekennzeichnet, dass** die Einfüllanschlussöffnung einen Öffnungsquerschnitt aufweist, der in Einbaulage des Flüssigkeitsbehälters in einer schräg zur Horizontalebene verlaufenden Ebene liegt.

6. Flüssigkeitsbehälter nach einem der vorhergehenden Ansprüche,
**dadurch gekennzeichnet, dass** die Einfüllanschlussöffnung fluchtend zu der ersten Öffnung liegt.

7. Flüssigkeitsbehälter nach einem der vorhergehenden Ansprüche,
**dadurch gekennzeichnet, dass** die Behälterbefüllungsöffnung in Einbaulage des Flüssigkeitsbehälters fluchtend oder oberhalb der oberen Wand des Flüssigkeitsbehälters liegt, insbesondere indem die Vorkammer sich über die obere Wand des Flüssigkeitsbehälters erstreckt.

8. Rückstromgesicherte Befülleinrichtung für flache Flüssigkeitsbehälter, umfassend
- Einen durch eine Vorkammerwandung begrenzten Vorkammerinnenraum,
- eine in der Vorkammerwandung ausgebildete Behälterbefüllungsöffnung,
- eine in der Vorkammerwandung ausgebildete Einfüllanschlussöffnung, welche zur Zufuhr einer Flüssigkeit ausgebildet und so ausgerichtet ist, dass ein Flüssigkeitsstrom, der durch die Einfüllanschlussöffnung in den Vorkammerinnenraum eintritt, auf die Behälterbefüllungsöffnung trifft,
- eine in der Vorkammerwandung ausgebildete Abflussöffnung, welche zur Abfuhr einer Flüssigkeit aus dem Vorkammerinnenraum ausgebildet und so angeordnet ist, dass sie in Einbaulage der Befiülleinrichtung unterhalb der Behälterbefüllungsöffnung liegt.

9. Befülleinrichtung nach Anspruch 8,
**dadurch gekennzeichnet, dass** die Behälterbefüllungsöffnung durch eine untere Öffnungskante begrenzt wird, die in Einbaulage des Flüssigkeitsbehälters auf gleicher Höhe oder unterhalb einer die Einfüllanschlussöffnung begrenzenden unteren Öffnungskante der Einfüllanschlussöffnung liegt.

10. Befülleinrichtung nach Anspruch 8 oder 9,
**dadurch gekennzeichnet, dass** die Behälterbefüllungsöffnung durch eine obere Öffnungskante begrenzt wird, die in Einbaulage des Flüssigkeitsbehälters auf gleicher Höhe oder unterhalb einer die Einfüllanschlussöffnung begrenzenden oberen Öffnungskante der Einfüllanschlussöffnung liegt.

11. Befülleinrichtung nach einem der vorhergehenden Ansprüche 8-10, **dadurch gekennzeichnet, dass** die Behälterbefüllungsöffnung durch eine untere Öffnungskante begrenzt wird, die in Einbaulage des Flüssigkeitsbehälters zumindest abschnittsweise, vorzugsweise vollständig als gerade Kante auf einer horizontalen Ebene verläuft.

12. Befülleinrichtung nach einem der vorhergehenden Ansprüche 8-11, **dadurch gekennzeichnet, dass** die Behälterbefüllungsöffnung einen rechteckigen Querschnitt mit einer in Einbaulage des Flüssigkeitsbehälters horizontal verlaufenden unteren Kante hat.

13. Befülleinrichtung nach einem der vorhergehenden Ansprüche 8-12,
**dadurch gekennzeichnet, dass** die Einfüllanschlussöffnung einen Öffnungsquerschnitt aufweist, der in Einbaulage des Flüssigkeitsbehälters in einer schräg zur Horizontalebene verlaufenden Ebene liegt.

14. Befülleinrichtung nach einem der vorhergehenden Ansprüche 8-13;
**dadurch gekennzeichnet, dass** die Einfüllanschlussöffnung fluchtend zu der Behälterbefüllungsöffnung liegt.

15. Verfahren zum Befüllen eines flachen Flüssigkeitsbehälters, mit den Schritten:
- Zuführen von Flüssigkeit durch eine Einfüllanschlussöffnung in eine Vorkammer,
- Durchleiten der Flüssigkeit von der Einfüllanschlussöffnung durch die Vorkammer über eine Behälterbefüllungsöffnung in den Flüssigkeitsbehälter, wobei die Behälterbefüllungsöffnung vorzugsweise so zu der Einfüllanschlussöffnung angeordnet ist, dass ein Flüssigkeitsstrom, der durch die Einfüllanschlussöffnung strömt, auf die Behälterbefüllungsöffnung trifft und insbesondere die Behälterbefüllungsöffnung fluchtend zu der Einfüllanschlussöffnung angeordnet ist,
**dadurch gekennzeichnet, dass** Flüssigkeit, welche aus dem Flüssigkeitsbehälter durch die Behälterbefüllungsöffnung tritt, in der Vorkammer schwerkraftbedingt durch eine Abflussöffnung austritt, die in Schwerkraftrichtung unterhalb der BeElälterbefüllungsöffnung und der Einfüllanschlussöffnung liegt.
